# DEMANDE DE BREVET EUROPEEN

(11) **EP 0 822 639 A1**
(43) Date de publication de la demande: **04.02.1998**
(21) Numéro de dépôt: 97830373.3
(22) Date de dépôt: 21.07.1997
(51) Int. Cl.: H02K 1/16, H02K 15/02, H02K 15/085

(54) **Moteur électrique, particuliérement du type appelé brushless ou à commutation électronique**

(30) Priorité: 02.08.1996 IT FI960186
(71) Demandeur: TKD Tekne Dental S.n.c. di Ravalli Adolfo & C., 50145 Firenze (IT)
(72) Inventeur: Ravalli, Adolfo, 50100 Firenze (IT)
(74) Mandataire: Martini, Lazzaro

(57) **Abrégé**

Moteur életrique, comprenant un paquet statorique constitué d'une pluralité de tôles annulaires (100) superposées chacune desquelles présente un nombre prédéterminé de gorges (1) aptes à délimiter, dans leur ensemble, des sièges ou logements correspondants pour un ou plusieurs enroulements statoriques. Chaque gorge (1) présente une ouverture (2) de communication avec l'extérieur pour permettre le positionnement et/ou la formation de l'enroulement du stator de l'extérieur du paquet.

## Description

La présente invention à pour objet un moteur électrique du type appelé "Bruschless" ou à commutation électronique.

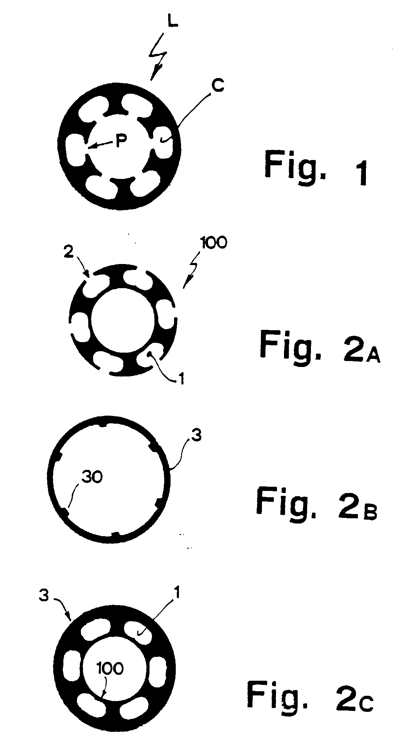

Il est connu que le paquet statorique d'un moteur électrique est formé par une pluralité de tôles annulaires superposées selon le développement longitudinal de l'enroulement respectif, et dont les spires sont disposées dans des logements définis par des gorges prévues sur chaque tôle. En correspondance de chaque gorge il y a un passage radial de communication avec l'intérieur pour permettre le positionnement et/ou la formation des spires de l'enroulement de l'intérieur du paquet. Dans la figure 1 des dessins annexés est représentée une vue en plan de la tôle du type décrit: avec (L) est indiquée la tôle dans sa totalité, avec (C) sont indiquées les gorges et avec (P) sont indiqués les passages pour les spires de l'enroulement.
Mais l'expériance a démontré que l'emploi de ce gendre de tôles dans la fabrication des paquets statoriques des moteurs électriques présente quelque incovénient. En effet, on vérifie des difficultés opérationnelles dans le positionnement de l'enroulement de l'intérieur du paquet spéciallement dans le cas des moteurs de dimensions réduites, soit qu'il s'agisse d'un enroulement déjà formé et soit que l'enroulement doit être formé directement sur le paquet. En outre, la discontinuité magnétique crée par les passages nécessaires au positionnement ou à la formation directe de l'enroulement statorique comporte une reduction du rendement de la machine.

Le but principale de la présente invention est celui d'obvier aux inconvénients précités.
A ce résultat on est parvenu conformément à l'invention en adoptant l'idée de réaliser un dispositif ayant les caractéristiques décrites dans la revendication 1. D'autres caractéristiques font l'objet de la revéndication 2.

Les avantages qui dérivent de la présente invention consistent essentiellement en ce qu'il est possible de simplifier de manière considerable la fabrication des stators des moteur électriques, même de dimensions réduites comme ces qui sont employés en odontologie et au même temps augmenter le rendement; que un moteur conformément à l'invention est de fabrication simple, économique et fiable même après un temps prolongé d'utilisation.

Ces avantages et caractéristiques de l'invention ainsi que d'autres seront plus et mieux compris de chaque homme du métier à la lumière de la description qui va suivre et à l'aide des dessins annexés donnés à titre d'exemple pratique d'une forme concrète de réalisation, mais à ne pas considérer dans le sens limitatif, sur lesquels: - la Fig. 1 représente une vue en plan d'une tôle traditionnelle; - la Fig. 2A représente une vue en plan d'une tôle conformément à l'invention; - la Fig. 2B représente une vue en plan d'un élément de garniture qui est associable à une tôle conformément à l'invention; - la Fig. 2C représente une tôle conformément à l'invention, qui résulte de l'assocition des éléments des Figg. 2A et 2B.

Reduit à sa structure essentielle et en référence aux figures 2A-2C des dessins annexés, un moteur électrique selon l'invention comprend un paquet statorique formé d'une pluralité de tôles annulaires (100) superposés chacune desquelles présente un nombre prédéterminé de gorges (1) aptes à délimiter, dans leur ensemble, des sièges ou logements correspondants pour un ou plusieurs enroulements statoriques. Chaque gorge (1) présente un'ouverture (2) de communication avec l'extérieur pour permettre le positionnement et/ou la formation de l'enroulement statorique de l'extérieur du paquet (Fig. 2A) . Ce-ci présente un grande simplification dans la fabrication du stator, puisque il n'y a aucune limitation d'éspace de manoeuvre, contrairement au cas de tôles conventionelles qui présentent les ouvertures tournées vers l'intérieur.

Avantageusement, selon l'invention, à chaque tôle est associé un anneau correspondant (3) externe et coaxial lequel est pourvu d'appendices (30) tournés vers l'intérieur et destinés à se loger avec précision dans les ouvertures (2) desdites gorges (1) (Fig. 2B).

Les tôles (100) et les anneaux externes (3) sont en matériel ferromagnétique normalement utilisé dans la fabrication des tôles pour moteurs électriques. Comme schématiquement illustré sur la Fig. 2C, ladite combinaison des tôles et des anneaux respectifs permet de réaliser la fermeture du circuit magnetique sur chaque élément du paquet statorique et de reduire ainsi, par rapport au cas des tôles traditionaux, les pertes dues aux discontinuités constituées par les ouvertures necessaires pour le positionnement et/ou la formation directe de l'enroulement statorique. Ce-ci est particulièrement avantagieux dans le cas de moteurs de dimensions reduites avec un rapport élevé dimensions/puissance et très fiables, comme par exemple dans les applications odontologiques. Le rotor du moteur électrique décrit est du type traditionnel et, pour ce-là, ne pas décrit dans le détail.

## Revendications

1. Moteur électrique, comprenant un paquet statorique formé d'une pluralité de tôles annulaires (100) superposées chacune desquelles présente un nombre prédéterminé de gorges (1) aptes à délimiter, dans leur ensemble, des sièges ou logements correspondants pour un ou plusieurs enroulements statoriques, caractérisé en ce que chaque gorge (1) présente un'ouverture (2) de communication avec l'extérieur pour permettre le positionnement et/ou la formation de l'enroulement statorique de l'extérieur du paquet.

2. Moteur électrique selon la revendication 1 caractérisé en ce que à chaque tôle est associé un anneau correspondant (3) externe et coaxial lequel est pourvu d'appendices (30) tournés vers l'intérieur et destinés à se loger avec précision dans les ouvertures (2) desdites gorges (1).
